# EUROPEAN PATENT APPLICATION

(11) **EP 4 506 635 A1**
(43) Date of publication of application: **12.02.2025**
(21) Application number: 24193420.7
(22) Date of filing: 07.08.2024
(51) Int. Cl.: F24F 12/00, F24D 5/02, F24D 10/00, F24D 11/00

(54) **HEAT INTERFACE UNIT FOR HEAT RECOVERY**

(30) Priority: 08.08.2023 DK PA202370399
(71) Applicant: Wavin B.V., 1118 BK Schiphol (NL)
(72) Inventor: THORUP, Per, 8400 Ebeltoft (DK); EILRICH, Kjeld, 8700 Horsens (DK); JENSEN, Rene Borup, 8700 Horsens (DK); FRAHM, Soren Xerxes, 8700 Horsens (DK)
(74) Representative: Houghton, Mark Phillip

(57) **Abstract**

The present invention provides a recovery system for use with an external heating system. Wherein the system uses a ventilation channel to collect heat from around a heat exchanger (HIU) of a water heating system within an enclosed area, releasing this heat into a chamber of the ventilation system to pre-heat or post-heat the air flowing through the system. It is noted that the system may also release the collected heat into the external air within the ventilation system's heat exchanger to remove heat from the enclosed area. Utilizing this system allows heat from the water heating system that would have otherwise been wasted, to be repurposed to improve the heating of the ventilation system.

## Description

### Background

In many modern buildings, especially houses, and other enclosed areas, it is preferable for the building to be as airtight as possible, limiting the flow of air into, and out of the building usually, as a means to conserve heat within the building, though this also limits the risk of odours and allergens entering the enclosed area from the surroundings. However, these buildings would still comprise a ventilation system to allow the air within the building to circulate to mitigate the risk of damp, mould and similar problems forming, and to facilitate heat within the enclosed area to be dispersed throughout the enclosed area to make the personnel within the building more comfortable.

Every building used by people needs to be ventilated with fresh air from outside.

People, pets, plants, coffee machines, bathing, cooking, new carpets etc. all add to the indoor environment with humidity, dust particles, volatile gasses, and CO₂ from exhaled air. Ventilating acts to dilute/remove these pollutants from the indoor environment. Historically building, particularly enclosed areas have used ventilation grilles in the facades of our houses and/or as openings in our window frames, particularly when the wind blows, these allow for cross ventilation of the building. In addition, it is and has become common to have mechanical extraction of air from bathrooms and from a cooker hood when cooking, grilles and window openings accommodate for the displaced air.

These traditional mechanisms present some inherent challenges. For example, the direct openings also allow for outdoor particles and noise to enter the enclosed area. Further, in cold climate areas the air entering the enclosed area will need significant heating power to maintain a comfortable indoor environment.

As a consequence, the invention of MVHR (Mechanical Ventilation with Heat Recovery) units became popular during the 1970's and have been further developed to recover as much energy as possible from the stale air being expelled from buildings to the fresh air entering the buildings. When installing mechanical balanced ventilation, the before mentioned grilles in facades and windows are no longer relevant.

In international terms named the types of ventilation include:
Natural ventilation (when powered by outside wind or a chimney effect in the enclosed area)
Mechanical extract ventilation MEV (fan powered extraction of air, while fresh air enters through openings)

Mechanical Ventilation with Heat Recovery MVHR when both extract and supply of air to the building is fan powered and in between is an air to air heat exchanger transferring the heat from the extracted air to the supply air and thereby greatly reduce the need for re-heating the fresh air.

As such all buildings have a ventilation system. It can either be natural, MEV or MVHR as described above.

A particular advantage of MHVR is the heat recovery element and optimisation of this fully exploits the benefits of these systems.

Relevant context is that HVAC, heating ventilation and air conditioning systems are typically used in warmer climates whereas in cooler climates, such as in northern Europe MHVR is more useful and particularly so in when well insulated accommodation.

Another, and separate, means to maintain the environment of a living space is by heating that environment. Direct heating usually requires additional airflow, such as to say staying combustion. However, many instances indirect heating is used. Indirect heating occurs when a usually come centralised, heating appliance a "boiler" is used to create hot water this hot water is then circulated within a dwelling and often to several individual dwellings. This is achieved in one way by the use of. Heat Interface Units (HIU) these separate the incoming heating water circulation from the boiler from local heating circulation in a given dwelling. These systems are also used in northern Europe but tend to be associated with older dwellings which are not designed for the air circulation associated with MHVR and generally high levels of heat transfer are provided.

Heat Interface Units (HIU) may be used with external heating systems, such as district heating systems, systems which for example provide a centralised source of a heating fluid distributed over an area or district, such as for the heating of several houses or commercial buildings. This is efficient as it provides centralised heat generation but losses can occur during distribution and minimising of these losses is beneficial. Distribution typically terminates at an individual enclosed area, such as a dwelling or commercial building, and to facilitate localised control heat is passed by means of a heating fluid to the local HIU. Currents systems are not optimal and heat loss may occur at the HIU.

Relevant prior art disclosures include US 2013/000882, DE 44 08 096, KR 2019 002 3784, EP 173 1846, DE 10 2005 002282 and EP 3 572 738 all of which fail to disclose enclosing relevant heat exchanger components within a housing for the purposes of heat transfer contained within the housing.

In summary, the heating of dwellings may be achieved in many ways and two of those ways include MHVR and HIU's. The environmental engineer can benefit from using these two systems to their strengths and mitigating their weaknesses. This problem is addressed by the present invention. Both systems are based upon heat transfer and recovery in one form or another, rather than heat generation as such, and both suffer from inefficiencies and limitations. An opportunity therefore arises to mitigate these inefficiencies and limitations.

### Summary

The present invention in its various aspects is as set out in the appended claims.

The present invention provides
a heat interface unit enclosed in a housing, for use with an external heating system, such as a district heating system, providing a heated fluid to the unit, the housing of the unit comprising:
a. an air to air heat exchanger for use in a ventilation system (MVHR) of an enclosed habitable space, such as a room;
   and
b. a water to water heat exchanger (HIU) for extracting heat from the heated fluid;
   the water to water heat exchanger being enclosed in a portion of the housing defining between the water to water heat exchanger and the housing;
      and:
   a heat conduit for conveying thermal energy in the form of air from the water to water heat exchanger to the air to air heat exchanger.

The latter feature providing means wherein:
air from the air space is brought into thermal communication with incoming air to the air to air heat exchanger for the communication of thermal energy in that are to that incoming air.

Air to air heat exchangers suitable for use in MHVR are generally very efficient, and are configured in use to take air external to a dwelling, such as outsider, bring it into the dwelling through the air to air heat exchanger and in doing so air from within the dwelling is passed to the outside of the dwelling also through the air to air heat exchanger. This gives rise to heated incoming air, the heat being harvested from the outgoing air. However, such air to air heat exchangers are not perfect and some additional heating is usefully provided. However, doing so external to the unit is less efficient and makes control more complex. The present invention in harvesting heated are surrounding the water to water heat exchanger compensates for those inefficiencies. Further, water to water heat exchangers are typically part of complex pipework in a plumbing system and are very difficult to insulate effectively. Further, water to water heat exchangers run most efficiently when as much thermal energy as possible is extracted from the incoming heating water. By effectively cooling the air space around the water to water heat exchanger this inefficiencies improved.

In summary, the present invention mitigates the inefficiency of the air to air heat exchanger, utilises the inefficiency of the water to water heat exchanger to compensate for the inefficiency of the air to air heat exchanger and in doing so increases its own efficiency.

The general concept of the present invention may be carried out in a number of specific ways which will be later described.

### Water to water heat exchanger

The water to water heat exchanger of the present invention is preferably water to water heat exchanger configured for use with, what is termed in the art a heat interface (HIU) for or as part of a district heating system. Such a water to water heat exchanger is understood by the person skilled in the art to have specific requirements. It accommodates a usually come high-pressure, incoming hot water stream. The water to water heat exchanger for use in the present invention is preferably configured to use an incoming water temperature between 70°C to 120°C. higher temperatures normally operate in the winter months and are significantly in excess of those used in normal domestic boilers. Such water to water heat exchangers preferred in the present invention are properly configured to provide a return water temperature in the range of 30°C to 60°C. This is typically accommodated by a very high heat exchange surface with a complex flow path to optimise heat exchange. In summary, the water to water heat exchange of the present invention is preferably configured to meet specific requirements and is not achieved by simply to water pipes in proximity or even abutting. The six significantly different from in a domestic central heating boiler system in which the water supplied is typically in the range of 60 to 80°C outgoing and 42 to 60°C return, the temperature differential being lower unless efficient.

Further preferred requirements of the water to water heat exchanger of the present invention as it is capable of accommodating an incoming, heated, water pressure of between 150 to 1600 kPa. However, preferably, to provide the required efficiency the preferred water pressure is between 400 and 1,600 kPa, most preferably between 500, 1,200 kPa. This is significantly different from that in a domestic central heating boiler system were the air-water heat exchanger will normally operate between 100 and 200 kPa and typically has a pressure safety release at 300 kPa.

As will be understood the water to water heat exchanger of the present invention is configured to operate at higher temperatures and pressures than most other heating systems and in particular domestic heating systems. The apparatus of the present invention is preferably configured for use in domestic heating.

The water to water heat exchanger of the present invention has the features: a conduit for incoming, heated, water, the conduit being configured to direct incoming water to heat exchanger plate plates of the exchanger, a conduit for returning the incoming, now outgoing, water external to the exchanger; a further conduit for

The effect of these differences is that the thermal mass of the water to water heat exchanger is significant and even with some degree of insulation heat is lost to the immediately surrounding environment. This normally results in dwellings with district heating systems and having a particular room or cupboard which is very warm. In the present invention that thermal energy is harvested and used to supplement the air to air heat exchanger.

In more general terms, the present invention provides an improved heat recovery system for heat recovery from a water to water heat exchanger (HIU) for extracting heat from the heated fluid and to use this recovered heat in a ventilation system (MVHR) for use within an enclosed area. In the present invention, the term enclosed area, refers to a specific enclosed area such as a dwelling, commercial building, a building, or specific rooms/spaces within a building. The claimed system comprises a water to water heat exchanger apparatus, for use within an enclosed area heating system, such as a central heating system or hot tap water supply, for use with a heated fluid such as supplied by a district heating system. The apparatus comprises a housing enclosing: (a) a ventilation system (MVHR) for an enclosed habitable space, such as a room, and (b) a water to water heat exchanger (HIU) for extracting heat from the heated fluid. Wherein, the housing comprises a heat channel, which may include optional means to regulate heat flow through the heat channel, wherein the channel is configured to harvest heat from the housing external to the water to water heat exchanger and distribute it to the ventilation system.

In overview, the heat recovery system of the present invention is preferably configured for use with an area heating system, such as a district heating system or central heating system, this being a heating system external to the enclosed area, configured to supply multiple enclosed areas, with heat by means of a heated fluid. Importantly, the enclosed area receives a heated fluid that comes from a heating system external to the enclosed area, this heated fluid is used in the water to water heat exchanger for heating central heating liquid of the central heating system of the enclosed area and for heating tap water.

In summary, in the present invention a heated fluid, such as, hot water or steam from a heating source external to the enclosed area is fed to the water to water heat exchanger within the specific enclosed area and the excess heat from this water to water heat exchanger is used to further heat the ventilation air, which is achieved by putting the water to water heat exchanger and ventilation system in one common housing. The housing facilitates capture of the thermal energy from air surrounding the water to water heat exchanger and passing it to the dwelling supply air after the air to air heat exchanger.

The present invention also relates to a system utilising the heat interface unit as described herein. To reiterate, the heat interface unit comprising the water to water heat exchanger (HIU) for extracting heat from the heated fluid within the housing may, in operation, lose heat to a housing in which it is located, for example, the heat interface unit may be configured to exchange heat between the heated fluid and water of a central heating system and/or tap water. When in use the heat interface unit may lose heat to the surrounding air around the heat interface unit but within the surrounding housing. The claimed system intends to harvest this lost heat within the housing, and instead use this heat within the ventilation system. More specifically, the heat channel within the housing is configured to gather the heat lost from the water to water heat interface unit and transport the heat to the MVHR to increase the temperature of the air within the ventilation system for the surrounding enclosed area.

This improves the efficiency of the heating system within the housing by repurposing heat that would have otherwise been wasted within the housing.

This system can also prevent the loss of heat from creating humidity or dampness within the housing that may damage the components of the heat interface unit or the fluid system, providing the heating fluid, it is coupled to.

The air to air heat exchanger of the present invention is preferably configured to allow the exchange of heat between air internal to a dwelling and are external to the dwelling, without the air mixing. More specifically the MVHR may be configured to have a separate system for the internal and external air flows wherein the air to air heat exchanger allows heat to be transferred between the airflows. Such a system helps to prevent odors, allergens, and other debris from entering the district through the ventilation system. The air to air heat exchanger unit of the present invention is therefore preferably used in such a system.

One example of such a ventilation system would comprise an exterior air channel, an interior air channel, and an air to air heat exchanger. Wherein the exterior air channel comprises an exterior air supply channel configured to receive external air, being air external to the enclosed habitable space, and an interior exhaust channel configured to transport air from the ventilation system to the interior of the enclosed habitable space. The interior air channel comprises: an interior supply channel configured to receive air extracted from a room or location within the enclosed habitable space, and an exterior exhaust channel configured to transport air from the ventilation system to space external of the enclosed habitable space. Wherein the supply channels convey the received airflow through the air to air heat exchanger and into their respective exhaust channels. Wherein the air to air heat exchanger provides an interface between the exterior and interior air channels to allow the external air to exchange heat with the internal air.

As previously noted, the heat harvested from the heat interface unit is conveyed to the MVHR via the heat channel. In the case of the example above this heat can be supplied to either the interior air channel or the exterior air channel, before or after the air to air heat exchanger, depending on the user's needs. For example, if the user wishes to heat the enclosed area, they can supply the heat to the interior exhaust channel where it will be released into the enclosed area.

Further at least one of the channels of the ventilation system may comprise a pump, such as in the form of an impeller, more preferably a fan, configured to pump air through the respective channel. This would allow the system to control the rate at which air from a specific channel passes through the air-to-air heat exchanger. This provides the system with another method of controlling the rate of heat exchange between the interior and exterior channels. As the system may adjust the flow rates of the air in one or both of the interior and exterior channels adjust the rate of heat exchange.

The heat interface unit water to water heat exchanger may be and is preferably part of a system that heats the water of a hot water supply system within the enclosed area. In such cases, the system requires water inlets and outlets to the apparatus for obtaining heat directly from the heated fluid using the heat interface unit water to water heat exchanger. Wherein the water inlets and outlets are usable for the provision of heated water for hot water plumbing supply and/or central heating, such as radiators, and the heat interface unit may provide a means of transferring heat from the heated fluid to said hot water plumbing supply and/or central heating systems. The present invention may include where, the heat interface unit may also allow heat exchange between the water in separate sub systems, for example between a hot water supply system and a separate central heating system, as well as the heated fluid, such as from a district heating source. All of the heat exchanges carried out by the heat interface unit would take place within the housing of the apparatus, thereby ensuring that any excess heat from the heat interface unit is contained within the housing where it can be harvested by the heated air channel.

### Exemplifications of the present invention

As previously indicated the general concept of the present invention, and in particular the heat interface unit may be provided and carried out in a number of specific ways.

In a further example of the heat interface unit, the water to water heat exchanger of the water heating system described above may allow for heat exchange between the inlets and outlets supplied to the apparatus. For example, the water to water heat exchanger may be further configured to exchange heat between the hot water system cold inlet, and central heating system return, such that heat from the central heating system return that would otherwise be wasted in view of the enclosed area as it would be returned to the external heating source can now be used for preheating the water of the hot water system cold inlet.

### In a first embodiment of the present invention

Another example of the heat interface unit water to water heat exchanger is a fluid to liquid heat exchanger, such as a shell and tube heat exchanger or a plate heat exchanger, or a gasket plate heat exchanger. It is noted that the apparatus may comprise multiple such water to water heat exchangers within the housing with the heat channel harvesting the excess heat from all of the water to water heat exchangers simultaneously, as all the excess or lost heat would still be contained within the housing surrounding the water to water heat exchangers.

The present invention may include where, the heat channel is simply a hollow channel that allows the air within the housing to reach at least one of the channels of the ventilation system channels, However, the heat channel may take other forms allowing the channel to harvest heat directly from the heat interface unit or another system or component within the housing.

The present invention may include where, the heat channel is a ventilation channel to harvest heat from the warm air within the housing external to the water to water heat exchanger and distributes it to the ventilation system by means of controllably admitting and admixing ventilation channel air with air in the exterior air channel. This ventilation channel may further comprise a valve configured to control the flow of air through the heat channel. In cases where the heat channel couples to multiple channels in the ventilation system there may be separate valves for each channel of the ventilation system, allowing the user to choose which channel receives the air from the heat channel. Such a heat channel may also comprise a master valve that controls the airflow from the housing, thereby controlling the airflow to all of the outlets simultaneously, and acting as a shut-off valve when the heat channel is not needed.

When using a ventilation channel for the heat channel, the system may be configured to have the admixture of the heat channel air and the ventilation system air occur before the air flows into the air to air heat exchanger, or after the airflow through the air to air heat exchanger. This may allow the system to pre-heat, or post-heat the air within the ventilation system as necessary. The system may admix the air after the air to air heat exchanger to post-heat the air in one of the ventilation channels to convey the harvested heat directly to the enclosed area interior or the external surroundings, to heat or prevent heating of the enclosed area respectively.

The present invention may include where, the heat channel may be configured to harvest heat from the housing or distribute the harvested heat to a channel of the ventilation system by means of a heat sink, which replaces the hollow heat channel described above. As with the heat channel above, the heat sink may convey the harvested heat to any channel of the ventilation system to distribute the heat into the ventilation system before or after the air to air heat exchanger as described above. Wherein the heat sink is in thermal communication with the air in the housing and the air in the ventilation system. The present invention may include where, the heat sink may convey the heat from the housing to a chamber of air which can be controllably admitting and admixing into the air in one of the channels of the ventilation system, thereby providing a means of storing the harvested heat when it is not required.

The heat sink is preferably in the form of a thermally conductive plate, such as a metal plate, preferably a high surface area metal plate, between the housing and the ventilation system. Using a heat sink to convey heat through the apparatus may be preferable as the heat sink is less likely to lose heat when conveying the harvested heat when compared to the hollow channel that may lose heat to the channel walls. The heat sink can also ensure that the air within the housing and the air within the ventilation system are isolated, this can help prevent odors and moisture from the housing from entering the ventilation system, the heat sink would also prevent odors, moisture, and/or allergens from the external air channel from entering the enclosed area via the housing of the apparatus.

The present invention may include where, the heat sink may include an insulating cover which can be used to control the rate of heat exchange occurring at the heat sink. More specifically, the insulating cover would be configured to actuate between different positions, wherein the insulating cover will cover a different portion of the heat sink in each position, also the cover to actuate between covering, partially covering, and uncovering the heat sink. As the insulating plate covers more of the heat sink the rate of heat exchange would be reduced, as heat could only be gathered or distributed by the uncovered portion of the heat sink. Further, the user may stop the heat channel from transferring heat by completely covering the heat sink with the insulating cover.

The present invention may include where, the heat channel may be in the form of an isolated channel, wherein the heat channel comprises a hollow channel with one end coupled to the housing external the water to water heat exchanger, and the other end of the channel is coupled to one of the channels of the ventilation system, with each end of the channel comprising a thermally conductive plate. These plates would allow the air within the heat channel to be in thermal communication with the air of the housing and the air within the ventilation system while preventing the air within the channel from mixing with the air of the housing or the ventilation system channels. As noted, this will prevent odors, moisture, or allergen from the housing, heating channel, and exterior air channels from entering the enclosed area via the ventilation system. Further, the heating channel would comprise a pair of insulating covers to control the rate of heat exchange at each conductive plate as described above. The channel may also be insulated along its length to prevent heat loss from the channel and to allow the heat channel to act as an insulated chamber, wherein the space within the channel is used to store excess heat until it is needed by covering both conductive plates with the insulating plates. This system would allow the system to isolate the air within each of the various systems, and to store heat for later use while also allowing the apparatus and ventilation system to be spaced further apart within the enclosed area, as the channel can be lengthened to meet the user's requirements.

Other feature of the invention may include that, the heat channel may comprise an air-water heat exchanger within the housing external to the water to water heat exchanger, that is in thermal communication with one or more water-air heat exchangers located within the air channels of the ventilation system. Wherein the air-water heat exchanger is in thermal communication with the water-air heat exchanger, allowing heat to be conveyed from the housing to the internal or external air channels of the ventilation system. In this system, there would be water channels between the air-water heat exchanger and water-air heat exchanger used to convey heat between the exchangers, such a system may be preferable over the hollow heat channels that use air due to the higher thermal conductivity of water, meaning a water-based system would be capable of storing more heat at once and may transfer heat at a faster rate compared to a system using air. Such a system would also ensure that the air of the enclosed area remained isolated from the external air as there would be no admixture or admittance of air between systems. As with the other systems, the heat gathered by this water-based system can be directed to a point in the ventilation system before or after the ventilation system air to air heat exchanger to pre-heat or post-heat the air in the ventilation system. More specifically, a series of valves may be configured to control where the heated water from the air-water heat exchanger is conveyed within the ventilation system, with each of the ventilation system channels having a respective water-air heat exchanger and a respective valve. Further, all of the water-air heat exchanger valves may be closed to allow the system to store the harvested heat from the housing until it is needed.

It is also noted that when using a water-based system to harvest and convey heat, such a system may comprise one or more pumps. Wherein these pumps can control the rate of the water flow through the heat channel. This would allow the user more control over the heat exchange rate within the heat channel, as adjusting the flow rate of the water may increase or decrease the rate of heat exchange through the channel to a desired rate.

As previously mentioned, the heat interface unit heat exchanger within the housing may be part of a water heating system, and/or central heating system. In cases where the heat channel uses a water base system, the channel may harvest heat directly from the heat interface unit water to water heat exchanger instead of using a separate air-water heat exchanger as described above. This would increase the efficiency of the heat exchange between the heat channel and heat interface unit of the apparatus, as the heat is gathered directly rather than from the air within the housing. As noted, the air within the housing would have a lower thermal capacity than the water within the heat interface unit therefore this system would have a faster heat-harvesting rate compared to the other features of the present invention described above. The heated water from the heat interface unit water to water heat exchanger is then conveyed through the heat channel to a water-air heat exchanger within the ventilation system as described above.

As before the heat interface unit may be coupled to a plurality of water-air heat exchangers within the ventilation system, wherein these heat exchangers are located within the interior and exterior air channels and can be located before or after the ventilation system's air to air heat exchanger to pre-heat or post-heat the air in the ventilation system as required. In these systems, there may be a plurality of valves configured to control which of the water-air heat exchangers receives the harvested heat from the HIU. The present invention may include where, all the valves may be closed to isolate the heat interface unit and ventilation system or may isolate the heat channel from the ventilation system to allow heat to be harvested and stored for later use.

The present invention may include where, the heat channel may be coupled to the return channel of the heat interface unit system, where the water would be cooler. This may be used to direct the harvested and stored heat into the return channel to pre-heat the water within the water heating system, thereby increasing the efficiency of the water heating process. and may also allow the ventilation system to use the return channel water as a heat sink to draw excess heat from the enclosed area via the ventilation system. This would allow greater control over the ventilation system temperature as it would allow cooling of the internal air channels in addition to the heating disclosed above.

By using the heat channels described above the claimed apparatus provides an improved heat recovery system, as the system is capable of harvesting excess, or wasted heat from within the heat interface unit, such as heat derived from the heating fluid, such as a district heating system, to be repurposed for heating the air within the ventilation system, thereby improving the efficiency of the heating systems. The system also allows the user greater control over the heat exchange rate within the ventilation system, by choosing where the harvested heat is injected into the ventilation system, thereby providing greater control over the interior air temperature. This system also ensures that the air interior and exterior of the district remain isolated to prevent odors and allergens from entering the district via the ventilation system, thereby improving the air quality within the district.

In the present invention the term housing relates to an enclosure. That enclosure is preferably a container. The container, as opposed to a room, is preferably constructed of a steel or plastics shell with apertures therein to conduct conduits, such as pipes and wires and related services through the shell. The housing is preferably sealed in normal use. This improves the efficiency of the present invention. The housing being primarily intended to be supplied with heat from a heating fluid supplied by an external heating source such as a district heating system does not comprise a (non-trivial) heat generating means such as a boiler.

### Summary of features

The heat interface unit of the present invention may be sealed and encloses an air volume in direct thermal communication with the water to water heat exchanger and the air to air heat exchanger so as to act as said heat conduit. By sealing the housing heat loss from convection of air within the housing is eliminated and the system is thereby more thermally efficient.

The heat interface unit of the present invention may be configured such that air volume may be enclosed in a conduit extending between the water to water heat exchanger and the air to air heat exchanger. The use of a conduit, particularly in conjunction with air impeller, such as a fan utilises a smaller volume of heated air, the air can be therefore hotter and heat transfer potentially more effective.

The heat interface unit of the present invention may be configured such that the housing encloses an air volume which is fed into an air conduit of the air to air heat exchanger within the housing and which volume is replenished through a one-way air valve to the outside of the housing, that enclosed air volume forming said heat conduit. In this approach the present invention the housing is sealed except for airflow unit directionally from external to the housing through to the airflow into or going out of the air to ai heat exchanger. Specifically, the airflow from external to the dwelling coming inside the dwelling, for the reasons further mentioned elsewhere in this document.

The heat interface unit of the present invention may be configured such that the air volume is fed into an inlet conduit, within the housing, of the air to air heat exchanger within the housing.

The heat interface unit of the present invention may be configured such that the air volume is fed into an outlet conduit, within the housing, of the air to air heat exchanger within the housing. This provides improve system efficiency by increasing the speed at which heat is transferred since heated air from surrounding the water to water heat exchanger is passed directly into the air to air heat exchanger. This preferably occurs by inducting that heated air into the air incoming to or outgoing air from the core of the air to air heat exchanger. The transfer is preferably to the outgoing air as this maintains the higher thermal gradient between the incoming air in the outgoing air for more efficient thermal transfer.

The heat interface unit of the present invention may comprise an air impeller to circulate the air surrounding the water to water heat exchanger to convey to the air to air heat exchanger. These are impeller increases the efficiency of the present invention by deliberately displacing air within the housing.

The heat interface unit of the present invention may be configured such wherein the unit further comprises one or more valves for regulating the conveyance of air from the water to water heat exchanger to the air to air heat exchanger. In situations such as in the summertime it may not be necessary to supplement significantly the heating of incoming air and by providing a valve the present invention is more versatile so as to enable optimisation of the heat flow from the water to water heat exchanger to the air to air heat exchanger.

The heat interface unit of the present invention may be configured such that the water to water heat exchanger is configured for heat exchange of district heating water. As previously considered district heating takes place at high temperatures and pressures and the heat loss from the water to water heat exchanger can be considerably higher than in purely domestic systems, thus enhancing the efficiency of the present invention.

The heat interface unit of the present invention may be configured such that the water to water heat exchanger is devoid of insulation on the outer surface of the heat exchanger over at least a portion of its external wall, that portion being in communication with said air surrounding. Typically, a heat exchanger is insulated so that only the heat is transferred which is intended to be between one medium and another and it is therefore unnecessary and deliberate step two reduce overall or part of the heat exchanger unit the degree of insulation so as to further facilitate the present invention, as heat "lost" in the water to what heat exchanger is not lost to the system but simply from that particular item. Hence the present invention provides a benefit in what is otherwise a system inefficiency.

The heat interface unit of the present invention may be configured such that at least a portion of its external wall comprises a plurality of metal protrusions forming a heat exchange surface. I providing a higher surface area there is more effective heat transfer, this emphasises the feature of the present invention with the deliberate harvesting of heat from the water to water heat exchanger, thus giving higher efficiency, even though some benefit can be achieved due to incidental heat loss

The heat interface unit of the present invention may be configured such that the housing is a metal enclosure. The housing has the advantage that it both provides a secure physical base for mounting the water to water and air to air heat exchangers and also forms the means by which air is moved so is to perform the heat transfer function of the invention

The heat interface unit of the present invention may be configured such that the housing is a thermally insulated enclosure. Whilst a metal enclosure provides the physical rigidity necessary enclosure is preferably insulated so as to reduce heat loss. This is in addition to any insulation around the individual heat exchangers as unlike conventional systems there is intended to be some degree of heat loss from the water to water heat exchanger and this needs to be contained for optimal efficiency.

The present invention also includes a system for providing hot water and heated air to a dwelling comprising the heat interface unit of any preceding claim. The air to air heat exchanger may be configured for use in a ventilation system (MVHR) of an enclosed habitable space is configured to convey air from within the enclosed habitable space to outside the space and to convey air from outside the enclosed habitable space to inside the enclosed habitable space and in doing so is configured to exchange heat between the air conveyed by those air flows. The present invention provides the core of the system for improved and more efficient heating and ventilation of the dwelling.

### Detailed Description

The present invention is illustrated in the following drawings:
Figure 1: is a schematic representation of the heat interface unit of the present invention showing in schematic form the principal functional components of the invention and their interrelation. In this figure the individual features are denoted by numerals and were no arrows present those numerals are placed over the feature denoted.
Figure 2: depicts schematic of an air to air heat exchanger of a ventilation system forming part of the heat interface unit of the present invention showing the main functional components.
Figure 3: depicts schematic of an air to air heat exchanger of a ventilation system forming part of the heat interface unit of the present invention showing further features.
Figure 4: depicts a heat interface unit of the present invention that utilizes valves within the ventilation channel coupling the ventilation system to the water heating system housing.
Figure 5: depicts an example heat recovery system of figure 2 utilizing a pair of heat channels, with one upstream and one downstream of the air to air heat exchanger of the ventilation system.
Figure 6: depicts a heat interface unit of the present invention that utilizes a heat transfer plate within the ventilation channel coupling the ventilation system to the water heating system housing.
Figure 7: depicts an example heat recovery system of figure 4 utilizing a pair of heat transfer plates, with one upstream and one downstream of the air to air heat exchanger of the ventilation system.
Figure 8: depicts a heat interface unit of the present invention that utilizes a heat channel with a pair of heat transfer plates, with one positioned at each end of the heat channel coupling the ventilation system to the water heating system housing.
Figure 9: depicts an example heat recovery system of figure 6 utilizing a pair of heat channels, each with a respective pair of heat transfer plates, with one upstream and one downstream of the air to air heat exchanger of the ventilation system.

In the aforementioned figures, like identified features perform equivalent functions and references to an identified feature in one figure can be taken to describe the function of that same numbered feature in another figure.

The claimed system comprises the following parts:
Wide arrows in the figures are indicative of, in use, airflow;
2- heat interface unit of the present invention
4- inlet conduits of the present invention (i.e. items below the name).
6- outlet conduits of the present invention (i.e. items below the name).
8- sealed housing of the heat interface unit of the present invention
10- air to air heat exchanger;
12- Exterior input chamber;
14- Exterior output chamber;
16- Interior input chamber;
18- Interior output chamber;
20- air to air heat exchanger core;
22-conduit for extracting (cold) air from outside a building and channelling that air to core 20;
24-conduit for expelling (cooled) air from the core 20 to outside the building by;
26-conduit for extracting (warm) air from inside a building and channelling that air to core 20;
28-conduit for expelling (warmed) air from the core 20 to inside the building;
30- Air pumps;
32- particulate, filters located in conduits 26 and 28 respectively;
34- Air pump, being an outlet fan for displacing air from inside a building to outside a building and effectively forming part of conduit 24;
36- Air pump, being an inlet fan for displacing air from outside the building to inside a building and effectively forming part of conduit 28;
40- water to water heat exchanger (core);
42-pipe for inputting hot water, such as from a district or area heating supply to the water to water heat exchanger;
44-pipe for return water, cooled, such as back to the district or area heating supply from the water to water heat exchanger;
46-pipe for inputting (cooled) water from a central heating system or from a water supply;
48-pipe for outputting (heated) water from the water to water heat exchanger core two a central heating system or hot water supply within a dwelling;
50,50'- Ventilation channel;
52,52'- Valve (ventilation channel);
54 one-way air inlets
56 buffer area for one way air inlet
58 sealed interior portion of housing
59 optional dividing wall to segment interior portion of housing 58
60,60'- heat transfer plate (ventilation system);
62,62'- insulating plate;
64- heat transfer plate (water heating system);
66-heat transfer conduit such as exemplified by features 50 or 70
70- isolated ventilation channel;
72- inlet to housing (optional) providing a one-way inlet of air into an area surrounding the water to water heat exchanger.

The present invention provides a heart exchanger unit for use in an improved heat recovery system, which utilizes waste heat from a water to water exchanger to provide supplement heat input to an air to air heat exchanger.

### Specific description of the invention schematic

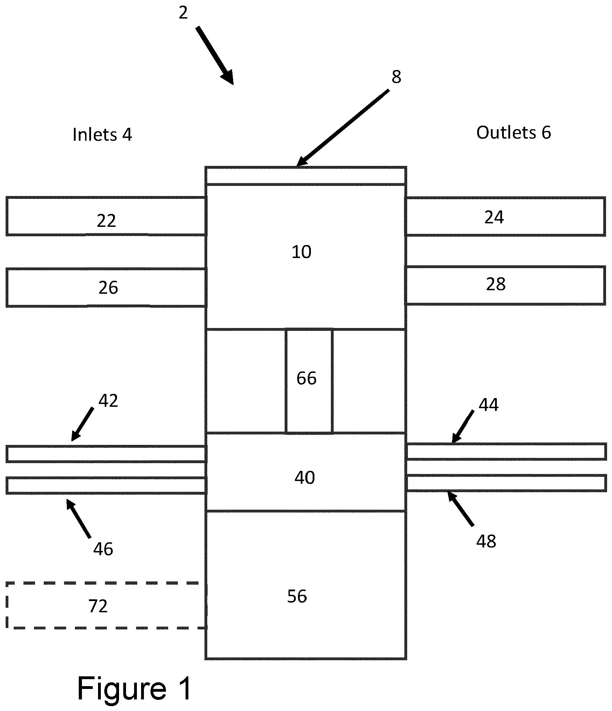

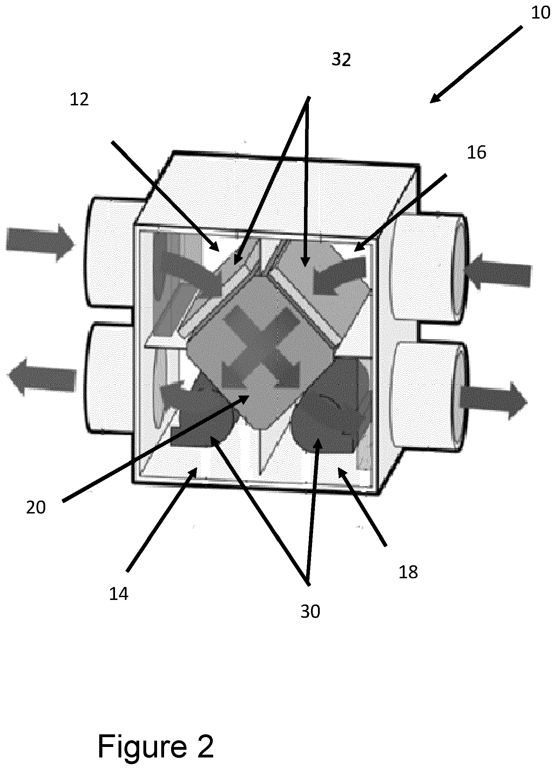

Figures 1 and 2 provide a schematic overview of the functional features of the present invention, and in particular the heat interface unit 2. Heat exchanger unit 2 comprises inlet conduits 4 for the inlet of air and water into the unit and outlet conduits 6 for the outlet of air and water from the unit. The unit being enclosed in a sealed housing 8, sealed such that the only flow of materials, air or water, into or out of the housing occurs by means of said conduits. The housing fully encloses an air to air heat exchanger 10 and a water to water heat exchanger 40 and between which heat exchangers a heat transfer conduit for the purposes of transmitting heat from the water to water heat exchanger to the air to air heat exchanger by means of communicating heated air is present.

A first set of conduits, 22, 24, 26, 28 is for the purposes of conveying air into (22, 26) an air to air heat exchanger 10 and expelling that same air (24, 28) from the air to air heat exchanger 10.

A second set of conduits 42, 44, 46, 48 is for the purposes of conveying water into (42, 46) and out of (44, 48 the water to water heat exchanger 40. Those conduits sealedly penetrate the housing (i.e. the apertures in the housing through which the conduits pass (water and air) are sealed to prevent leakage).

In the system of the present invention, i.e. when the heat interface unit is in use, air is extracted from external to the building by means of conduit 22, passed through the air to air heat exchanger 10 and expelled into the building through conduit 24. Simultaneously air from inside the building is extracted using conduit 28 and passed through air to air heat exchanger 10 so as to transfer heat from that air to the incoming air from external to the building. Similarly, when the heat interface unit is in use external heated water is input, such as from a district heating system, at high pressure and temperature through conduit 42 into the water to water heat exchanger and then passes out again through the outlet water conduit 46. The flow of this water may be mediated by a valve and optionally a related control system. Similarly, the above-mentioned flow of the air, may be also be mediated by valves and a control system but these features are not central to the invention.

Key to the present invention is heat transfer conduit 66 which serves to transfer heat from the water to water heat exchanger to the air to air heat exchanger. This may be performed in a variety of manners (see below). More specifically, heated air surrounding the water to water heat exchanger is conveyed either passively or actively (such as by means of a fan or other impeller) to the air to air heat exchanger where heat is contributed to the flow of incoming air 22, 24. This serves to offset the inefficiency of the air to air heat exchanger and to increase the efficiency of the water to water heat exchanger particularly by ensuring that returned hot water would otherwise be cooler as the surrounds of the water to water heat exchanger are maintained at a lower temperature by removing hot air from that surround.

A further, optional, feature of the present invention is that the housing may have a one-way inlet 72 for air to enter into the housing 8, such as into a buffer area 56, which is effectively an air volume to pre-warm incoming air before it is conveyed not only to the air to air heat exchanger but into the flow of incoming air. The buffer area 56 being part of the housing, is sealed from external air outflow and from air inflow except through a one-way valve. The buffer area may communicate with the area surrounding the whilst what air to air heat exchanger by a further one-way valve. This is because air having a very low viscosity may tend to diffuse through a one-way valve, such as a louvre and so lower pressure drop valves can be used while still maintaining effective sealing of the housing (for practical purposes). In variations of the present invention without the one-way air inlet 72 buffer area 56 may be present but for the purposes of providing additional insulation of the equipment (10, 44, et cetera) within the sealed housing by providing means were air can circulate around the inside of the housing so as to further harvest heat dissipated, such as from the conduits in addition to the water to water heat exchanger so that it may be conveyed to the incoming air, thus further improving the efficiency of the present invention.

However, for the purposes of the present invention the housing is entirely sealed. Further features of the present invention include fans for assisting conveying the air through the conduits 22, 24, 26, 28 and pumps for conveying water through the conduits 42, 44, 46, 48. However particularly regarding the water pumps these can be external to the heat interface unit of the present invention.

### Specific description of the air to air heat exchanger

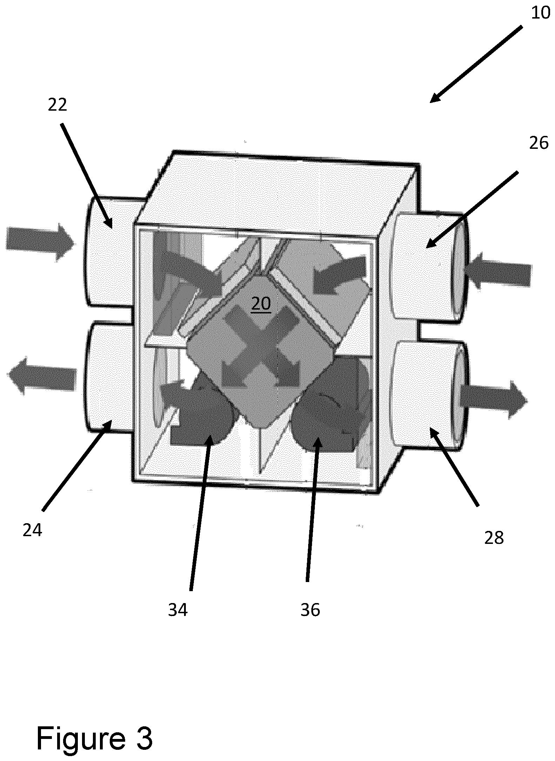

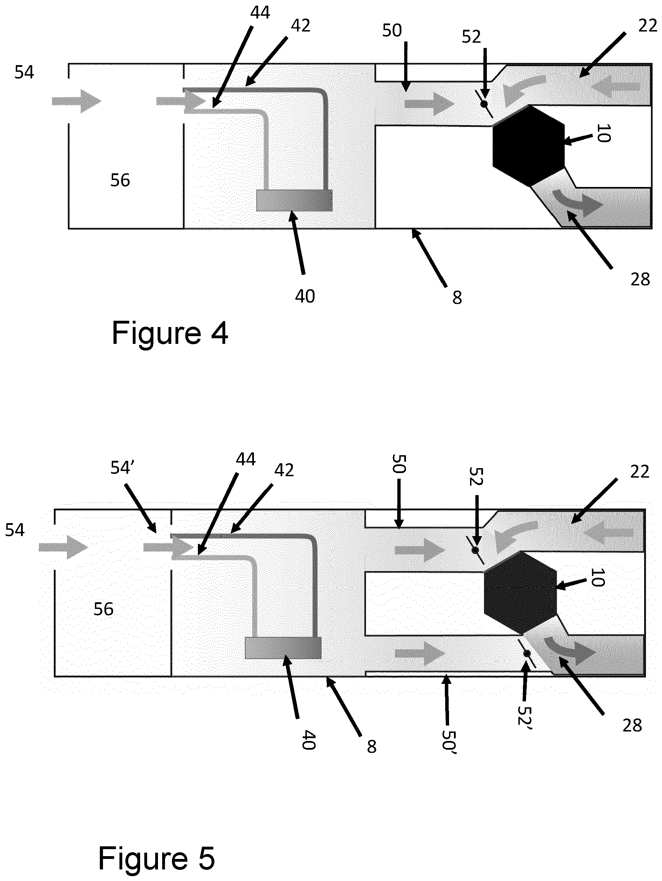

Figures 2 and 3 depict an example of heat exchanger 10 for used in the ventilation system of the present invention and thereby also for use in the system of the present invention. This description of the air to air heat exchanger can be used directly in conjunction with the further figures in which the air to air heat exchanger 10 is present in the context of the heat interface units of the overall invention as depicted in figures 4 to 9. Wherein the heat exchanger 10 comprises four chambers: an exterior inlet chamber 12 for receiving air from the surroundings, an interior inlet chamber 16 for receiving air from within the enclosed area, an exterior output chamber 14 for releasing the internal air from within the enclosed area into the surroundings, and an interior output chamber 18 for releasing the external air from the surroundings into the enclosed area, with each chamber having a respective channel for receiving air or ejecting air from the chamber. Wherein the four chambers 12,14,16,18 are coupled together via an air to air heat exchanger 20, which is configured to allow heat to be exchanged between the interior airflow and exterior airflow while keeping each flow isolated from one other, meaning that the internal and external air is not mixed during the heat exchange process.

The present invention may include where, the air to air heat exchanger 10 may also comprise one or more filters 32 positioned over the inputs of the air to air heat exchanger 10 to remove any debris, or allergens within the air flow entering the air to air heat exchanger 10. Though there may also be filters on the air to air heat exchanger outputs to reduce the risk of any debris or allergens that bypass, or otherwise get through the first filter 32, from entering the enclosed area. The air to air heat exchanger 10 may also comprise one or more pumps 30 coupled to the output of the air to air heat exchanger 20 to direct the airflow out of the air to air heat exchanger 20 and to accelerate the airflow leaving the air to air heat exchanger unit 10. This is because the air to air heat exchanger 20 would be configured to have the airflows move slowly inside the air to air heat exchanger 20 to increase the amount of heat that is transferred before the air leaves the heat interface unit 10. It is also noted that these pumps 30 may be utilized to mix the heated air gathered from the water heating system with the air within the ventilation system when using the system to post-heat the air within one or both output chambers 14,18.

It is noted that the system used to couple the water heating system to the ventilation system may be coupled to any or all the above-mentioned chambers 12,14,16,18 in the heat interface unit 10. More specifically, the heated air may enter the interior input chamber 16, and/or the exterior input chamber 12 to pre-heat the air entering the air to air heat exchanger 20, or the heated air may enter the interior export chamber 18 to post-heat the interior air before it enters the enclosed area, lastly the heated air may be released into the exterior output chamber 14 when the heat is not needed in the enclosed area to help remove excess heat and cool the interior of the enclosed area. Noted that the means used to couple the water heating system to the ventilation system would comprise valves or similar features to control which chamber receives the heated air.

### Specific description of embodiments of the invention

### Partially sealed heat exchanger housing heat interface unit

Figures 4 and 5 depict an example of the heat interface unit of the present invention, as with these and other subsequent figures the heat interface unit of the present invention comprises sealed housing 8, air to air heat exchanger 10, water to water heat exchange 40 and the relevant conduits 22, 28 and 42, 44 as previously described. The further conduits 24, 26, 46, 48 are implicitly present but are not shown.

In these examples of the invention the housing is sealed to prevent the egress of our from the housing other than into the. Specifically, the housing encloses an air volume which is fed into an air conduit within the housing and which volume is replenished through a one-way air valve to the outside of the housing.

In the example in Figure 4, the heat transfer conduit connecting the air to air heat exchanger and the water to water heat exchanger, in this example is in the form of a ventilation channel 50. Wherein the ventilation channel 50 comprises a hollow channel with a valve 52 at one end to control the flow of air within the ventilation channel 50. In such cases, the heated air that has been collected from the housing would simply diffuse through the channel of the ventilation channel towards the ventilation system, to provide additional heat to a specific chamber within the air to air heat exchanger 10. Wherein the user may close the valve 52 when additional heat is not required. It is noted that the ventilation channel would preferably be insulated to prevent heat from being lost as the gathered air defuses through the channel. This example provides the simplest system for transporting heat from the water heating system 40 to the ventilation system. In a preferred version of this example of the invention there is provided a fan in conduit 28 so as to suck the air through the air to air heat exchanger core 20 of the heat interface unit 10 so as to produce a reduced pressure in the region of the valve 52 so as to actively inductor into the incoming air conduit 22 from ventilation channel 50.

Note that this system may include a vent at the end of the channel coupled to the housing of the water heating system, to allow air from the location of the water heating system 40 to passively enter the ventilation channel 50, however, some features of the present invention may further comprise a fan or pump to actively transport the air into the ventilation channel 50, these features would also help increase the amount of airflow through the channel 50 allowing more heat to reach the ventilation system, compared to when the air diffuses through the channel 50.

In some features of the present invention, the afore mentioned ventilation channel 50 may be supplemented by an additional ventilation channel 50' comprise multiple channels, as depicted in Figure 5. Wherein one end of each channel is coupled to the water heating system location, with the other end of each channel being coupled to a respective chamber 12,14,16,18 of the air to air heat exchanger 10. Each channel 50,50' would also comprise a respective valve 52,52' for controlling the flow in that channel. In this configuration the channels 50,50' may comprise a single input channel that gathers the heated air from the water heating system location, this input channel would then divide into the plurality of ventilation channels 50,50' coupled to a respective chamber 12,14,16,18 of the heat exchanger 10. In this arrangement, there may be a valve positioned at the point the input channel divides to control which channels receive the airflow from the housing.

In a further variation of the present invention, not shown, the heat interface unit shown in figure 5 is used wherein ventilation channel 50 is absent and only ventilation channel 50's present. This is advantageous when air is extracted using a fan present in conduit 28 as it actively draws air from surrounding the water to water heat exchanger 40, the pipes 42, 44 and optionally through the buffer area 56 thus further cooling the water to water heat exchanger.

In both figures 4 and 5 the heat exchanger unit of the present invention comprises a one-way valve, such as a louvre at one way in that 54 and supplemental E a further one way (i.e. unidirectional) air inlet 54' between the buffer area 56 and the air volume surrounding the water to water heat exchanger.

### Completely sealed housing heat exchanger unit

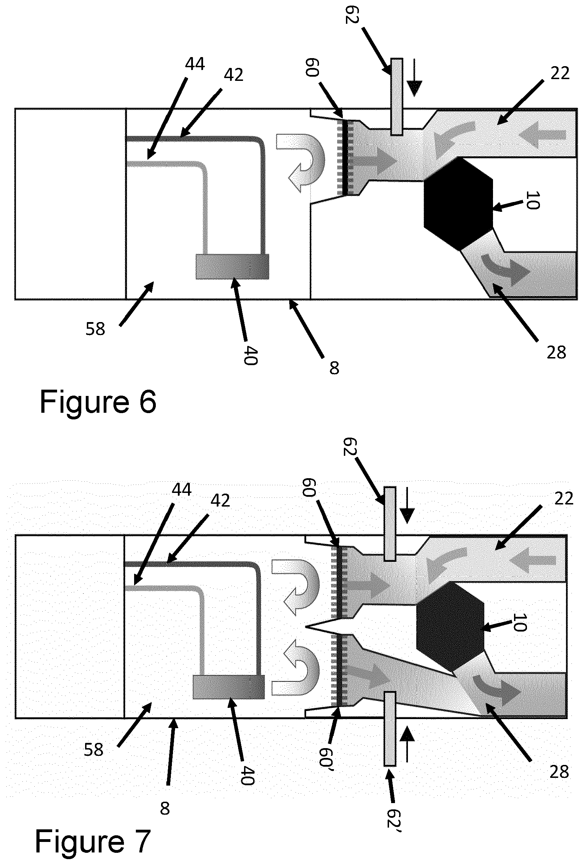

Figures 6, 7, 8 and 9 depict a heat exchanger unit of the present invention wherein the housing eight is completely sealed, sealed in the sense that conduits 42, 44, 46, 48 and pipes 22, 24, 26, 28 pass through the housing but do so in a sealed manner, that is the contents of the conduits and pipes are not permitted to enter the sealed interior portion of the housing. The housing has an internal volume air volume 58 and within this space are present the disclosed features and in particular the air to air heat exchanger unit 10, the water to water heat exchanger 40 and the various features of the specific heat transfer conduit mechanisms disclosed herein together with relevant portions of said conduits. The housing may also enclose various electrical wiring, pumps, fans et cetera but these are not mandatory for the present invention, unless specifically mentioned. One such specific feature relevant to these figures is the optional presence of a fan for circulating the air in sealed interior portion 58 of the housing 8

Figure 6 shows another example of the heat exchanger unit of the present invention., in this example, the valve 52 within the ventilation channel 50 has been replaced with a heat transfer plate 60. Heat transfer plate metal plate having protrusions on either side so as to provide a higher surface area than an equivalent flat plate for the purposes of transferring heat energy from the air in sealed interior portion 58 and the relevant conduit(s) 22, (and also 28 for figure 7). In this case, the plate 60 is positioned at the end of the channel proximate to the water heating system 40, though it may be positioned at other points within the channel 50 as well. This plate 60 would allow heat exchange between the air on either side of the plate 60 without the need for the air to mix. This is especially useful as it would prevent steam from entering the ventilation system. When steam enters the ventilation system it would raise the humidity which may negatively affect the heat exchange rate within the heat exchanger 10, it could also increase the risk of mould forming within the ventilation system, and/or the risk of water damage to the pumps within the ventilation system. Further, as depicted in figure 5, there may be multiple channels each containing a respective heat transfer plate 60,60', and with each being coupled to a respective chamber 12,14,16,18 of the heat exchanger 10 within the ventilation system.

Systems that utilize one or more heat transfer plates 60,60' may also utilize a respective insulating cover/plate 62 for each transfer plate 60 to control the heat exchange rate of the heat transfer plate 60. Specifically, an insulating plate 62 would be positioned above the heat transfer plate, wherein the insulating plate 62 is configured to be actuated so that the insulating plate 62 can be removed, or adjusted to cover only a portion of the heat transfer plate 60. This way the insulating plate 62 can be actuated to adjust the rate of heat exchange at the heat transfer plate 60, wherein the insulating plate 62 would cover more of the heat transfer plate 60 to reduce the amount of heat exchange to the point where the insulating plate 62 completely covers the heat transfer plate 60 preventing any heat exchange between the water heating system 40 and the ventilation system. It is noted that the insulating plate 62 should be above the heat transfer plate 60, which in this context means that the insulating plate 62 is closer to the ventilation system, as this would prevent steam from reaching the insulating plate 62. As the steam may leave residue on the insulating plate 62 that over time could damage the insulating plate 62 and/or the mechanism used to actuate it.

Figure 7 shows a further example heat exchanger unit of the present invention, wherein there are multiple channels coupling the water heating system 40 and the ventilation system, there may be an insulating plate 62,62' for each of the heat transfer plates 60,60' within each of these channels. In the cases, wherein the multiple channels are coupled to a single input channel, the insulating plate 60 may be positioned at the point where the input channel divides into separate channels, with a respective insulating plate for the plurality of channels to allow the insulating plates to be used to control which channels receive heat from the input channel.

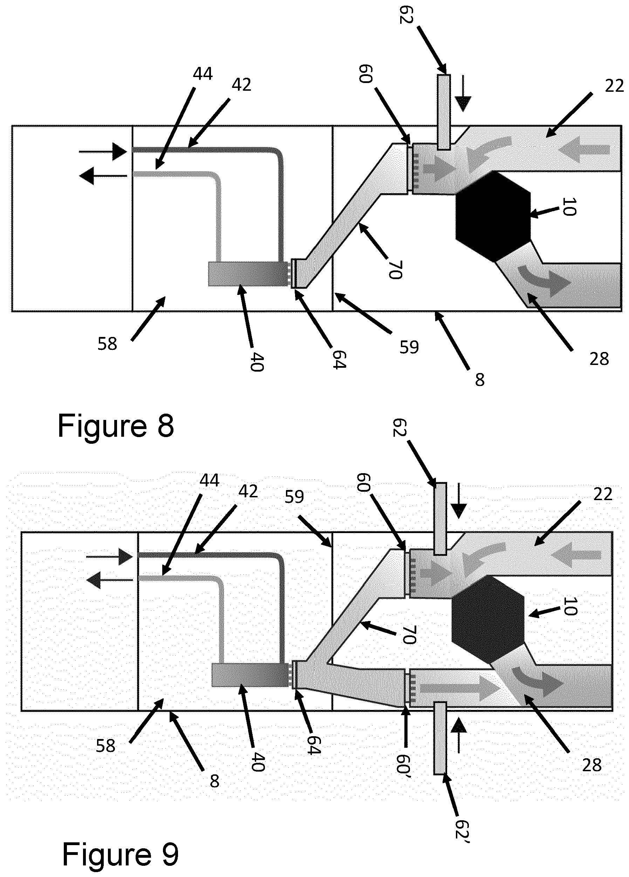

Figures 8 and 9 depict show further alternative heat exchanger units of the present invention, with respect to the examples shown in Figures 4 and 5, wherein the channel connecting the water heating system 40 and the ventilation system has two heat transfer plates 60,64, one positioned at each end of the channel 70. Meaning that in this system the air within the channel 70 is isolated from the air in both the ventilation system and the water heating system housing. This helps to remove the risk of any cross-contamination between the two systems. For example, this system would prevent any allergens, odours, or water vapours within the external air, or the housing, from entering the district via the ventilation system or the channel 70. As with the previous system, the system of Figure 6 includes insulating plates 62 which can be actuated to cover, uncover, or partially cover one of the heat transfer plates 60,64 to control the rate of heat exchange at the plate, in this case, the insulating plate 62 covers the heat exchange plate 60 at the end of the channel that is coupled to the ventilation system.

The present invention may include where, this system may have two insulating plates 62, one for each of the heat transfer plates 60,64. In this system, the air within the channel 70 can be thermally isolated from both the ventilation system and the water heating system 40. With this arrangement, the air in the channel 70 can be used to store excess heat when it is not needed in the ventilation system. This is to say the insulating plates can be actuated to allow heat to enter the channel 70 from the warmer system, out of the ventilation system and water heating system 40, while blocking heat exchange from the other heat transfer plate, this would allow the air within the channel 70 to be heated. Once this air is heated the insulating plates could be used to store heat that may be used by the ventilation system at a later time, by covering the heat transfer plates 60,64 at each end of the channel 70 to prevent the gathered heat from escaping. And though a system with only one insulating plate 62 could be used similarly to store heat by trapping the heat within the housing or a chamber between the housing and the plate, by having a pair of insulating plates the user would have greater control over the heat within the channel 70, for example, the user can prevent the heat from leaking back into the water heating system's location, and control which one of the systems receive the heat when it is needed. Additionally, as shown in figure 8, the system may comprise multiple heat channels 70 with each channel having a respective pair of heat transfer plates, or more preferably there may be multiple heat channels coupled to a single input vent within the water heating system housing. This way each channel would couple to a single plate within the housing, reducing the amount of material needed to form the system and improving the efficiency of the heat gathering from the housing as all the heat is collected by a single plate, where it can be directed to the desired channels rather than having the heat diffuse into all of the channels simultaneously, which may result in a given channel having insufficient heat. Additionally, it is noted that the housing may not be sufficiently large to house several heat transfer plates close enough to the heat interface unit heat exchanger for sufficient heat transfer to occur, so a single plate feeding heat into the channel 70 is preferable.

By implementing any of the systems depicted above a user can provide a system that can repurpose heat from a water heating system 40 within an enclosed area that would otherwise be wasted, by using the heated air from said water heating system 40 to heat air within the ventilation system of the same enclosed area. This excess heat may be gathered by using a channel of air 50,70 to allow the heat to diffuse from the enclosed area to the ventilation system. By using this system, a user can improve the efficiency of an enclosed area as less energy would be wasted , as heat absorbed by the surrounding air is repurposed to heat the ventilation system, thereby providing a greener solution.

Heat exchangers of the present invention may be termed heat-exchangers, such as may be used to avoid ambiguity.

The water to water heat exchanger of the present invention may be termed a water-to-water heat-exchanger, such as may be used to avoid ambiguity.

The air to air heat exchanger of the present invention may be termed a air-to-air heat-exchanger, such as may be used to avoid ambiguity.

The term water of the present invention includes water supplemented with anticorrosion additives and other components conventional to heat exchanger water flows.

The subject matter of the following numbered sentences is within the scope of the present invention:
1) A heat recovery system, for use with an external heating system, such as a district heating system, providing a heated fluid to the apparatus, the apparatus comprising a housing enclosing:
   a. a ventilation system (MVHR) for an enclosed habitable space, such as a room;
      and
   b. a heat exchanger (HIU) for extracting heat from the heated fluid wherein:
      the housing comprises a heat channel (50); optional means to regulate heat flow through the heat channel,
         the heat channel being configured to harvest heat from the housing external to the heat exchanger and distribute it to the ventilation system.
2) The apparatus of sentence 1, wherein the ventilation system comprises:
   a) an exterior air channel comprising:
      i) an exterior air supply channel (12) configured to receive external air, being air external to the enclosed habitable space,
      conveying air through an airflow heat exchanger (20) to:
      ii) an interior exhaust channel (18) configured to transport air from the ventilation system to the interior of the enclosed habitable space;
   b) an interior air channel comprising:
      iii) an interior supply channel (16) configured to receive air extracted from a room or location within the enclosed habitable space;
      conveying air through the airflow heat exchanger (20) to:
      iv) an exterior exhaust channel (14) configured to transport air from the ventilation system to space external to the enclosed habitable space;
      the airflow heat exchanger (20) being configured to interface between the exterior and interior air channels to allow the external air to exchange heat with the internal air.
3) The apparatus of sentence 1 or sentence 2 further comprising:
   water inlets and outlets to the apparatus for obtaining heat directly from the heated fluid by means of the heat exchanger,
   the water inlets and outlets being usable for the provision of heated water for hot water plumbing supply and/or central heating, such as radiators.
4) The apparatus of sentence 3, wherein the heat exchanger (HIU) is further configured to exchange heat between the hot water system cold inlet and central heating system return.
5) The apparatus of any preceding numbered sentence, wherein the heat exchanger (HIU) is a fluid to liquid heat exchanger, such as a shell and tube heat exchanger or a plate heat exchanger, or a gasket plate heat exchanger.
6) The apparatus of any preceding sentence, wherein at least one of the channels (12, 14, 16, 18) of the ventilation system further comprises a pump (30) configured to pump air through the respective channel.
7) The apparatus of any preceding numbered sentence, wherein the heat channel is a ventilation channel (50, 70) and further comprises a valve (52) configured to control the flow of air through the ventilation channel (50, 70).
8) The apparatus of any preceding numbered sentence, wherein the heat channel (50, 70) is in the form of a ventilation channel and is configured to harvest heat in the form of warm air, from the housing external to the heat exchanger and distribute it to the ventilation system by means of controllably admitting and admixing ventilation channel air with air in the exterior or interior air channel.
9) The apparatus of sentence 8, wherein the admixture occurs before the airflow heat exchanger.
10) The apparatus of sentence 8, wherein the admixture occurs after the airflow heat exchanger.
11)The apparatus of any of sentences 1 to 7, wherein the heat channel is configured to harvest heat from the housing external to the heat exchanger and distribute it to the ventilation system by means of a heat sink (60, 60') in thermal communication with a portion of the exterior air channel and optionally controllably admitting and admixing air so heated into the rest of the exterior or interior air channel.
12)The apparatus of sentence 11, wherein the admixture occurs before the airflow heat exchanger.
13) The apparatus of sentence 11, wherein the admixture occurs after the airflow heat exchanger.
14) The apparatus of any of sentences 11 to 13, wherein heat from the heat exchanger is conveyed to an isolated heat channel and thereby to the heat transfer plate.

## Claims

1. A heat interface unit, for use with an external heating system, such as a district heating system providing a heated fluid to the unit, the heat interface unit comprising a housing, and further comprising, and mounted within the housing:
a. an air to air heat exchanger for use in a ventilation system (MVHR) of an enclosed habitable space;
and
b. a water to water heat exchanger (HIU) for extracting heat from the heated fluid;
the water to water heat exchanger being enclosed in a portion of the housing defining between the water to water heat exchanger and the housing;
and:
a heat conduit for conveying thermal energy in the form of air surrounding the water to water heat exchanger to the air to air heat exchanger.

2. The heat interface unit of claim 1 wherein the housing is sealed and encloses an air volume in direct thermal communication with the water to water heat exchanger and the air to air heat exchanger so as to act as said heat conduit.

3. The heat interface unit of claim 2 wherein the enclosed air volume is enclosed in a conduit extending between the water to water heat exchanger and the air to air heat exchanger.

4. The heat interface unit of claim 1 wherein the housing encloses an air volume which is fed into an air conduit of the air to air heat exchanger within the housing and which volume is replenished through a one-way air valve to the outside of the housing, that enclosed air volume forming said heat conduit.

5. The heat interface units of claim 4 wherein the air volume is fed into an inlet conduit, within the housing, of the air to air heat exchanger within the housing.

6. The heat interface units of claim 4 or claim 5 were in the air volume is fed into an outlet conduit, within the housing, of the air to air heat exchanger within the housing

7. The heat interface unit of any preceding claim further comprising air impeller to circulate the air surrounding the water to water heat exchanger to convey to the air to air heat exchanger.

8. These interface unit of any preceding claim wherein the unit further comprises one or more valves for regulating the conveyance of air from the water to water heat exchanger to the air to air heat exchanger.

9. The heat interface unit of any preceding claim wherein the water to water heat exchanger is configured for heat exchange of district heating water.

10. The heat interface unit of any preceding claim wherein the water to water heat exchanger is devoid of insulation on the outer surface of the heat exchanger over at least a portion of its external wall, that portion being in communication with said air surrounding.

11. The heat interface unit of claim 10 wherein said at least a portion of its external wall comprises a plurality of metal protrusions forming a heat exchange surface.

12. The heat interface unit of any preceding claim wherein the housing is a metal enclosure.

13. The heat interface unit of any preceding claim wherein the housing is a thermally insulated enclosure.

14. A system for providing hot water and heated air to a dwelling comprising the heat interface unit of any preceding claim.

15. The system of claim 12 wherein the air to air heat exchanger for use in a ventilation system (MVHR) of an enclosed habitable space is configured to convey air from within the enclosed habitable space to outside the space and to convey air from outside the enclosed habitable space to inside the enclosed habitable space and in doing so is configured to exchange heat between the air conveyed by those air flows.
